# EUROPEAN PATENT SPECIFICATION

(11) **EP 3 915 876 B1**
(45) Date of publication and mention of the grant of the patent: **27.09.2023**
(21) Application number: 21175620.0
(22) Date of filing: 25.05.2021
(51) Int. Cl.: B64D 11/00

(54) **PRESET CAPTURE FOR A VEHICLE ENVIRONMENT MANAGEMENT SYSTEM**
VOREINGESTELLTE ERFASSUNG FÜR EIN FAHRZEUGUMGEBUNGSVERWALTUNGSSYSTEM
CAPTURE PRÉRÉGLÉE POUR UN SYSTÈME DE GESTION D'ENVIRONNEMENT DE VÉHICULE

(30) Priority: 28.05.2020 US 202062704790 P
(43) Date of publication of application: 01.12.2021
(73) Proprietor: Gulfstream Aerospace Corporation, Savannah, Georgia 31402 (US)
(72) Inventor: SPENCER, Stephen, Savannah, 31402 (US); MEDIN, Kristin, Savannah, 31402 (US); MCDANIEL, Theron, Savannah, 31402 (US); MENON, Preeti, Savannah, 31402 (US); KOSTOV, Kamen, Savannah, 31402 (US); GRETHER, Zachary, Savannah, 31402 (US)
(74) Representative: LKGlobal UK Ltd.

(56) References cited:
- EP-A1- 3 081 488
- EP-A1- 3 521 166
- WO-A1-2017/089858
- US-A1- 2016 059 954
- US-A1- 2016 062 327

## Description

### TECHNICAL FIELD

Embodiments of the present invention generally relate to aircraft environment management systems, and more particularly relate to aircraft environment management systems that store current settings as a preset for subsequent recall by a user.

### BACKGROUND OF THE INVENTION

Modern business aircraft typically include a well-appointed passenger cabin for the safety and comfort of aircraft passengers. Within the passenger cabin, various environmental factors define a passenger's flight experience while traveling in the aircraft. For example, the cabin temperature, lighting and media selections may make a more enjoyable flight experience. Accordingly, such environmental factors are typically designed to be adjustable/selectable by the passengers so that they can provide the experience they desire. While useful, contemporary cabin management systems lack the ability to create user-defined presets for environmental factors in an easy and convenient manner.

Accordingly, it is desirable to provide an aircraft environment system that offers passenger(s) the ability to easily select, save, and recall presetting for some or all of the environmental factors for an aircraft. Other desirable features and characteristics will become apparent from the subsequent summary and detailed description and the appended claims, taken in conjunction with the accompanying drawings and the foregoing technical field and background. WO 2017/089 858 has a controller including command hierarchy to prioritize inputs received from passenger and crew node to prevent conflicts between the inputs.

### SUMMARY

The disclosed embodiments relate to an aircraft environment management system with a preset capture feature to recall various cabin environment settings.

An aircraft is provided in accordance with appended claim 1. The appended dependent claims define further preferred features of the aircraft.

### DESCRIPTION OF THE DRAWINGS

Embodiments of the present invention will hereinafter be described in conjunction with the following drawing figures, wherein like numerals denote like elements, and
FIG. 1 is a view of an aircraft in which the disclosed embodiments can be implemented in accordance with a non-limiting embodiment.
FIG. 2 is a block diagram of an environmental management system in accordance with a non-limiting embodiment.
FIG. 3A and 3B are illustrations of mobile devices running an application for capturing a preset in accordance with a non-limiting embodiment.
FIG. 4 illustrates a method of the disclosure in accordance with a non-limiting embodiment.
FIG. 5 illustrates a method of saving, editing, and recalling a environment preset in accordance with a non-limiting embodiment.

### DESCRIPTION OF EXEMPLARY EMBODIMENTS

As used herein, the word "exemplary" means "serving as an example, instance, or illustration." The following detailed description is merely exemplary in nature and is not intended to limit the invention or the application and uses of the invention. Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary or the following description.

The disclosed embodiments relate to an aircraft having an environmental management system for which environmental factors may be preset by capturing the current state or status of the environmental factor. Non-limiting examples of such environmental factors include, main cabin lighting, accent lighting (e.g., up-wash, down-wash or directed/focused lighting), galley lighting, cabin temperature (e.g., air temperature or floor temperature), cabin humidity level, window shade placement (e.g., open, closed, half-open) and various media/audio visual or entertainment options (e.g., DVD, streaming content, music).

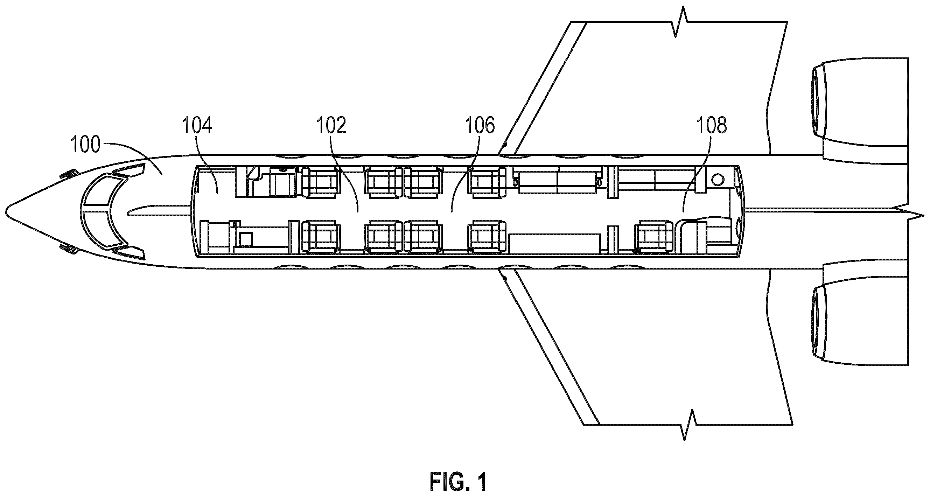

FIG. 1 is a cut-away view of the aircraft 100 to illustrate the passenger cabin 102. The passenger cabin 102 has various areas or compartments such as a galley area 104, a general seating area 106 and a private seating area 108.

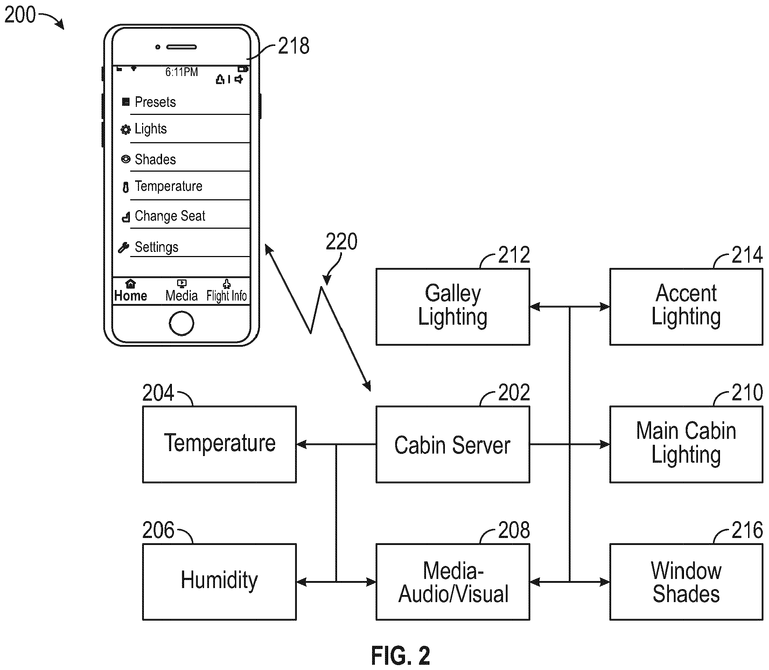

FIG. 2 is block diagram illustrating a non-limiting embodiment of an aircraft environmental management system in accordance with the disclosure. The system 200 includes a cabin server 202 that includes various processors, memory and communication/network electronics as will be appreciated by those skilled in the art. The cabin server 202 is coupled to various system or controls in the aircraft such as a temperature system 204 (i.e., heating and cooling) and a humidity system 206 for physical comfort of the passengers and a media - audio/visual system 208 to provide various forms of entertainment. Lighting is also an important environmental factor on board an aircraft. Non-limiting examples of various aircraft lighting systems include the main cabin lighting 210, galley lighting 212, accent lighting 214 (e.g., up-wash, down-wash or directed/focused lighting), and window shade systems 216 each of which impact how much light is available (and where) in the aircraft cabin.

The cabin server 202 is also in communication with a mobile computing device 218 that contains a software application (commonly referred to as an "app") that in accordance with exemplary embodiments is configured to record and/or recall environmental factor presets. In some embodiments, a mounted (or embedded in the aircraft) computing device can be used. As used herein, a "preset" means a predetermined setting of an environmental factor (or a combination of environmental factors) that is determined by a user and stored to be recalled and applied via the cabin server at a later time. The preset for any particular environmental factor can be determined and saved by a user simply by adjusting the environmental factor to a desired setting and saving the preset via the app running on the mobile (or mounted/embedded) computing device 218. As a non-limiting example, the cabin temperature, humidity and lighting each may be adjusted to user desired levels and saved under a preset labeled "sleep". As will be appreciated, more generic preset labels may be used in any particular embodiment (e.g., preset 1, preset 2 or preset 3). Alternatively, more descriptive preset labels may be employed, such as, take-off, landing, working, dining, relaxing or movie. In exemplary embodiments, the mobile (or mounted/embedded) computing device 218 communicates with the cabin server via a wireless communication channel 220. However, it will be appreciated that wired or optical communication channels can be employed.

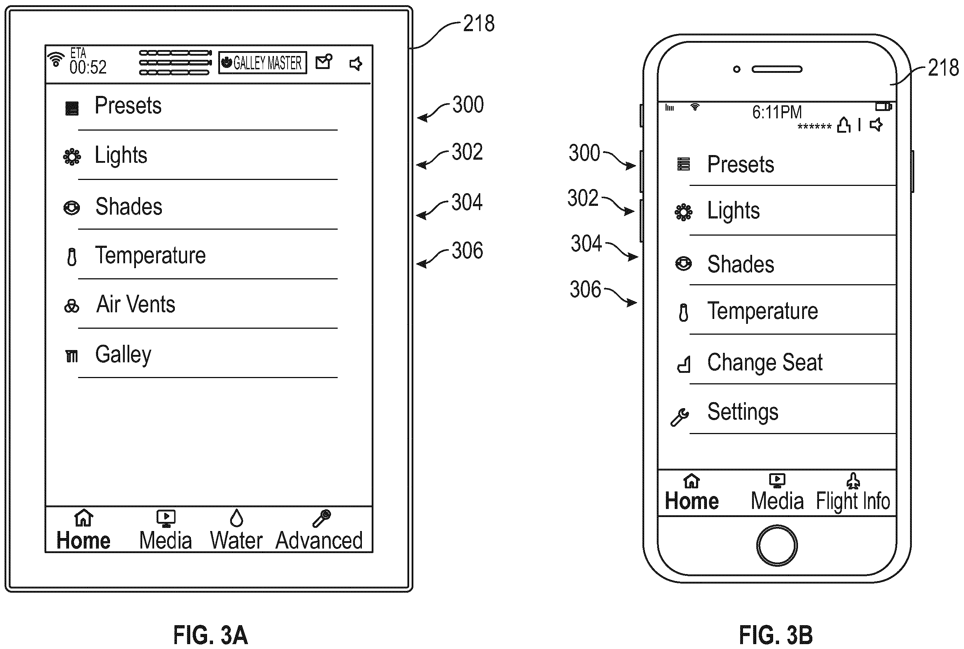

FIG. 3A and 3B illustrate exemplary embodiments of an app in accordance with the present disclosure running on a mobile (or mounted/embedded) computing device. If FIG. 3A, a tablet computing device is shown, while in FIG. 3B, a cellular telephone embodiment is illustrated. In each figure, various environmental factors can be selected for adjustment. Non-limiting environmental factors shown in FIG. 3A and 3B include lights 302 (leading to a selection of which lighting system), shades 304 (leading to a selection of the various window shades in the aircraft) and temperature 306. Also illustrated is the preset selection 300 that will capture some or all of the user desired settings or status of the environmental factors in the aircraft.

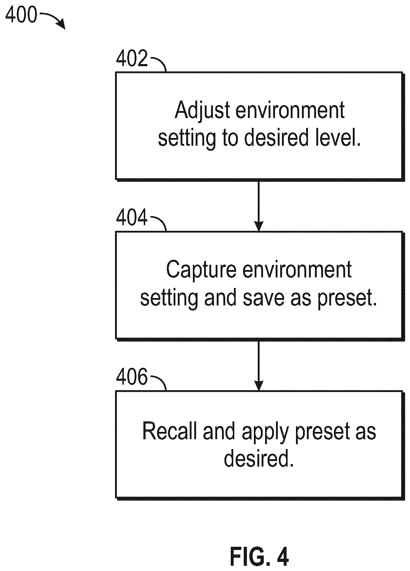

FIG. 4 is a diagram illustrating an exemplary method 400 for capturing an environmental factor preset. In block 402, a user adjusts an environmental factor to a desired setting. For example, a temperature setting, a humidity setting, a setting for one or more of the window shades in the aircraft or a lighting level for any of the various lighting systems on board the aircraft. In block 404, the user selects the preset capture icon (300 in FIG. 3) to record environmental attributes to be stored and label the preset (e.g., take-off, landing, working, dining, relaxing or movie). In block 406, that (or any) preset label can be reimplemented from any current setting of environmental factor simply by the user selecting the preset feature. As a non-limiting example, a working preset may involve high ambient lighting, a cool temperature and no media be played or displayed, while a relaxing present may involve low ambient lighting, a warmer temperature and music be played.

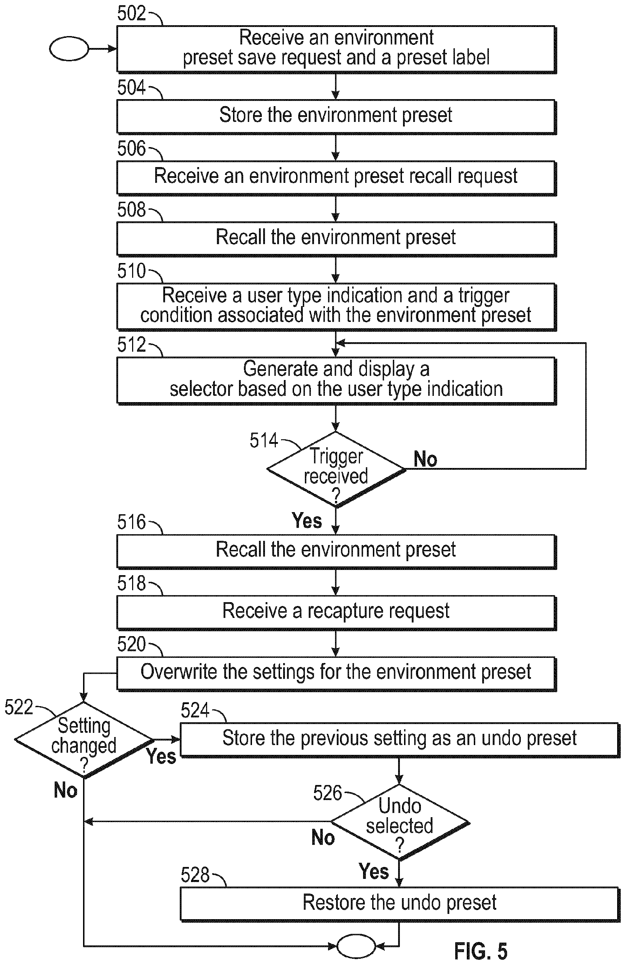

FIG. 5 is a diagram illustrating an exemplary method 500 for creating and using environment presets for a cabin of an aircraft. For example, method 500 may be performed by cabin server 202 to control temperature system 204, humidity system 206, media system 208, main cabin lighting 210, galley lighting 212, accent lighting 214, and window shade systems 216.

Block 502 receives a preset capture request and a preset label from a user associated with a passenger cabin having an environment. For example, a user may select preset selection 300 on mobile computing device 218 to cause cabin server 202 to receive the preset capture request. The preset label indicates a name for the environment preset for ease of identification of the environment preset.

Block 504 stores, as an environment preset using the preset label according to the name, a setting as it existed for each of a plurality of settable cabin environment systems at a time of receipt of the preset capture request. Each of the plurality of settable cabin environment systems is in operable communication with the passenger cabin and each controls an aspect of the environment based on the setting. For example, cabin server 202 may retrieve dimmer levels currently set for main cabin lighting 210, galley lighting 212, and accent lighting 214 to be saved as part of the environment preset. Similarly, cabin server 202 may save a temperature target of temperature system 204, a humidity target for humidity system 206, and a shade height of window shade system 216 as part of the environment preset. Settings for the media system 208 may include volume, display brightness, menu navigation settings, active inputs, and other audio-visual settings as part of the environment preset.

In the example provided, the plurality of settable cabin environment systems is an entirety of installed settable cabin environment systems for the passenger cabin. In other words, cabin server 202 controls the entire settable environment of the passenger cabin 102. Accordingly, cabin server 202 may provide control of the entire cabin environment, rather than single isolated zones or elements of the cabin environment.

Block 506 receives a preset recall request for the environment preset. For example, the user may enter the preset recall request on the mobile computing device 218. Block 508 recalls the environment preset by adjusting the setting of each of the plurality of settable cabin environment systems according to the environment preset.

Block 510 receives a user type indication and a trigger condition associated with the environment preset. For example, the user type indication may indicate whether the user is a passenger or a crew member and cabin server 202 may store the user type indication and the trigger condition in association with the environment preset. In some embodiments, the trigger condition is omitted.

Block 512 generates a selector whose selection produces the preset recall request and displays the selector in a location that is based on the user type indication. For example, the cabin server 202 may cause the selector to be displayed on a display screen in the galley area 104 as a crew primary location, on a display screen in seating areas 106 and 108 as a passenger primary location, or in both locations. In some embodiments, mobile computing device 218 is a passenger primary location.

Block 512 determines whether a trigger condition associated with the environment preset has occurred. The trigger condition indicates events, times, or situations that may occur during flight. When the trigger condition has not occurred, method 500 returns to block 512. When the trigger condition has occurred, method 500 proceeds to block 516.

Block 516 recalls the environment preset in response to occurrence of the trigger condition. In some embodiments, bootup of the aircraft environment management system is a trigger condition. In some embodiments, the aircraft transitioning between phases of flight is a trigger condition. For example, cabin server 202 may recall the environment preset in response to detecting deployment of landing gear.

Block 518 receives a recapture request for the environment preset that is associated with at least one of the plurality of settable cabin environment systems.

Block 520 overwrites the environment preset for the at least one of the plurality of settable cabin environment systems using the setting as it existed for at least one of the plurality of settable cabin environment systems at the time of receipt of the recapture request.

Block 522 determines whether the setting has changed in response to a setting adjustment input from the user. When the setting has not changed, method 500 ends. When the setting has changed, method 500 proceeds to block 524.

Block 524 stores the setting as it existed immediately prior to the setting adjustment input as an "undo" preset.

Block 526 determines whether an undo preset has been received from the user. For example, cabin server 202 may generate an undo changes selector associated with the undo preset whose selection reverts to the setting as it existed immediately prior to the setting adjustment input in block 528.

By providing the user ability to capture current aforementioned cabin environmental states as represented in-situ, save it as a preset, and recall presets for those various environmental factors of an aircraft, the disclosed embodiments can provide a passenger with an improved cabin experience during a flight on the aircraft.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other through one or more additional elements.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing the exemplary embodiment or similar embodiments. It should be understood that various changes can be made in the function and arrangement of elements without departing from the scope as defined in the appended claims.

## Claims

1. An aircraft, comprising:
a passenger cabin (102) having an environment:
a plurality of settable cabin environment systems (204, 206, 208, 210, 212, 214, 216) in operable communication with a user and each controlling an aspect of the environment based on a setting;
an aircraft environment management system (200) configured to create user-defined presets, wherein the aircraft environment management system is in electronic communication with the plurality of settable cabin environment systems and programmed to:
select and adjust the settings of any of the plurality of settable cabin environment systems in response to input from the user;
receive a preset capture request from the user (502);
store, as an environment preset, the setting as it existed for each of the plurality of settable cabin environment systems at a time of receipt of the preset capture request (504);
receive a preset recall request for the environment preset (506); and
recall the environment preset by adjusting the setting of each of the plurality of settable cabin environment systems according to the environment preset (508);
wherein the aircraft environment management system is further programmed to:
receive a recapture request for the environment preset and associated with at least one of the plurality of settable cabin environment systems (518); and
overwrite the environment preset for the at least one of the plurality of settable cabin environment systems using the setting as it existed for the at least one of the plurality of settable cabin environment systems at the time of receipt of the recapture request (520); and
wherein the aircraft environment management system is further programmed to:
adjust the setting in response to a setting adjustment input from the user;
store the setting as it existed immediately prior to the setting adjustment input as an undo preset (524); and
generate an undo changes selector associated with the undo preset whose selection reverts to the setting as it existed immediately prior to the setting adjustment input (526, 528).

2. The aircraft of claim 1, wherein the aircraft environment management system is further programmed to:
receive a preset label indicating a name for the environment preset from the user; and
store the setting using the preset label according to the name.

3. The aircraft of claim 2, wherein the aircraft environment management system is further programmed to:
receive a user type indication associated with the environment preset; and
generate a selector whose selection produces the preset recall request;
display the selector in a location that is based on the user type indication.

4. The aircraft of claim 3, further comprising a crew primary location and a passenger primary location, and wherein the aircraft environment management system is further programmed to display the selector in the crew primary location, in the passenger primary location, or in both the crew primary location and the passenger primary location based on the user type indication.

5. The aircraft of claim 4, wherein the passenger cabin defines a galley and a seating area, and wherein the aircraft environment management system is further programmed to display the selector in the galley as the crew primary location, and/or
wherein the passenger primary location includes a mobile computing device for use by a passenger.

6. The aircraft of any one of claims 1-5, wherein the aircraft environment management system is further programmed to:
receive a trigger condition associated with the environment preset;
store the trigger condition in association with the environment preset; and
recall the environment preset in response to occurrence of the trigger condition.

7. The aircraft of claim 6, wherein the aircraft environment management system is further programmed to recall the environment preset in response to bootup of the aircraft environment management system as the trigger condition, and/or
wherein the aircraft environment management system is further programmed to recall the environment preset in response to the aircraft transitioning between phases of flight.

## Patentansprüche

1. Flugzeug, das Folgendes umfasst:
eine Passagierkabine, die eine Umgebung aufweist:
eine Vielzahl von einstellbaren Kabinenumgebungssystemen in bedienbarer Kommunikation mit einem Benutzer und jeweils einen Aspekt der Umgebung auf Grundlage einer Einstellung steuernd,
ein Flugzeug-Umgebungsmanagementsystem, das dafür konfiguriert ist, benutzerdefinierte Voreistellungen zu erzeugen, wobei das Flugzeug-Umgebungsmanagementsystem in elektronischer Kommunikation mit der Vielzahl von einstellbaren Kabinenumgebungssystemen steht und zu Folgendem programmiert ist:
die Einstellungen beliebiger von der Vielzahl von einstellbaren Kabinenumgebungssystemen als Reaktion auf eine Eingabe von dem Benutzer auszuwählen und anzupassen,
eine Voreinstellungserfassungsaufforderung von dem Benutzer zu empfangen.
als eine Umgebungsvoreinstellung die Einstellung, wie sie für jedes von der Vielzahl von einstellbaren Kabinenumgebungssystemen zum Zeitpunkt des Empfangs der Voreinstellungserfassungsaufforderung vorhanden war, zu speichern,
eine Voreinstellungsabrufaufforderung für die Umgebungsvoreinstellung zu empfangen und
die Umgebungsvoreinstellung durch Anpassen der Einstellung jedes von der Vielzahl von einstellbaren Kabinenumgebungssystemen entsprechend der Umgebungsvoreinstellung abzurufen,
wobei das Flugzeug-Umgebungsmanagementsystem ferner zu Folgendem programmiert ist:
eine Neuerfassungsaufforderung für die Umgebungsvoreinstellung und verknüpft mit mindestens einem von der Vielzahl von einstellbaren Kabinenumgebungssystemen zu empfangen und
die Umgebungsvoreinstellung für das mindestens eine von der Vielzahl von einstellbaren Kabinenumgebungssystemen unter Verwendung der Einstellung, wie sie für das mindestens eine von der Vielzahl von einstellbaren Kabinenumgebungssystemen zum Zeitpunkt des Empfangs der Neuerfassungsaufforderung vorhanden war, zu überschreiben und
wobei das Flugzeug-Umgebungsmanagementsystem ferner zu Folgendem programmiert ist:
die Einstellung als Reaktion auf eine Einstellungsanpassungseingabe von dem Benutzer anzupassen,
die Einstellung, wie sie unmittelbar vor der Einstellungsanpassungseingabe vorhanden war, als eine Rückgängigmachen-Voreinstellung zu speichern und
eine Rückgängigmachen-Veränderungenauswahlvorrichtung zu erzeugen, die mit der Rückgängigmachen-Voreinstellung verknüpft ist, deren Auswahl zu der Einstellung zurückkehrt, wie sie unmittelbar vor der Einstellungsausführung vorhanden war.

2. Flugzeug nach Anspruch 1, wobei das Flugzeug-Umgebungsmanagementsystem ferner zu Folgendem programmiert ist:
ein Voreinstellungskennzeichen zu empfangen, das einen Namen für die Umgebungsvoreinstellung angibt, von dem Benutzer zu empfangen und
die Einstellung unter Verwendung des Voreinstellungskennzeichens entsprechend dem Namen zu speichern.

3. Flugzeug nach Anspruch 2, wobei das Flugzeug-Umgebungsmanagementsystem ferner zu Folgendem programmiert ist:
eine Benutzertypkennzeichnung zu empfangen, die mit der Umgebungsvoreinstellung verknüpft ist, und
eine Auswahlvorrichtung zu erzeugen, deren Auswahl die Voreinstellungsabrufaufforderung erzeugt,
die Auswahlvorrichtung an einem Ort anzuzeigen, der auf der Benutzertypkennzeichnung beruht.

4. Flugzeug nach Anspruch 3, das ferner einen vorrangigen Besatzungsort und einen vorrangigen Passagierort umfasst und wobei das Flugzeug-Umgebungsmanagementsystem ferner dafür programmiert ist, auf Grundlage der Benutzertypkennzeichnung die Auswahlvorrichtung an dem vorrangigen Besatzungsort, an dem vorrangigen Passagierort oder an sowohl dem vorrangigen Besatzungsort als auch dem vorrangigen Passagierort anzuzeigen.

5. Flugzeug nach Anspruch 4, wobei die Passagierkabine eine Bordküche und einen Sitzbereich definiert und wobei das Flugzeug-Umgebungsmanagementsystem ferner dafür programmiert ist, die Auswahlvorrichtung in der Bordküche als dem vorrangigen Besatzungsort anzuzeigen, und/oder
wobei der vorrangige Passagierort ein mobiles Datenverarbeitungsgerät zur Verwendung durch einen Passagier einschließt.

6. Flugzeug nach einem der Ansprüche 1 bis 5, wobei das Flugzeug-Umgebungsmanagementsystem ferner zu Folgendem programmiert ist:
eine Auslösebedingung zu empfangen, die mit der Umgebungsvoreinstellung verknüpft ist,
die Auslösebedingung in Verknüpfung mit der Umgebungsvoreinstellung zu speichern und
die Umgebungsvoreinstellung als Reaktion auf ein Auftreten der Auslösebedingung abzurufen.

7. Flugzeug nach Anspruch 6, wobei das Flugzeug-Umgebungsmanagementsystem ferner dafür programmiert ist, die Umgebungsvoreinstellung als Reaktion auf ein Hochfahren des Flugzeug-Umgebungsmanagementsystems als die Auslösebedingung abzurufen, und/oder
wobei das Flugzeug-Umgebungsmanagementsystem ferner dafür programmiert ist, die Umgebungsvoreinstellung als Reaktion darauf abzurufen, dass das Flugzeug zwischen Flugphasen wechselt.

## Revendications

1. Aéronef, comprenant :
une cabine passagers ayant un environnement ;
une pluralité de systèmes d'environnement de cabine réglables en communication fonctionnelle avec un utilisateur et contrôlant chacun un aspect de l'environnement sur la base d'un réglage ;
un système de gestion d'environnement d'aéronef configuré pour créer des préréglages définis par l'utilisateur, dans lequel le système de gestion d'environnement d'aéronef est en communication électronique avec la pluralité de systèmes d'environnement de cabine réglables et programmé pour :
sélectionner et ajuster les réglages d'un système quelconque de la pluralité de systèmes d'environnement de cabine réglables en réponse à une entrée de l'utilisateur ;
recevoir une demande de capture de préréglage provenant de l'utilisateur ;
stocker, comme préréglage d'environnement, le réglage tel qu'il existait pour chaque système de la pluralité de systèmes d'environnement de cabine réglables à un instant de réception de la demande de capture de préréglage ;
recevoir une demande de rappel de préréglage pour le préréglage d'environnement ; et
rappeler le préréglage d'environnement en ajustant le réglage de chaque système de la pluralité de systèmes d'environnement de cabine réglables selon le préréglage d'environnement ;
dans lequel le système de gestion d'environnement d'aéronef est en outre programmé pour :
recevoir une demande de recapture pour le préréglage d'environnement et associée à au moins un système de la pluralité de systèmes d'environnement de cabine réglables ; et
remplacer le préréglage d'environnement pour au moins un système de la pluralité de systèmes d'environnement de cabine réglables en utilisant le réglage tel qu'il existait pour au moins un système de la pluralité de systèmes d'environnement de cabine réglables à l'instant de réception de la demande de recapture ; et
dans lequel le système de gestion d'environnement d'aéronef est en outre programmé pour :
ajuster le réglage en réponse à une entrée d'ajustement de réglage provenant de l'utilisateur ;
stocker le réglage tel qu'il existait immédiatement avant l'entrée d'ajustement de réglage en tant que préréglage d'annulation ; et
générer un sélecteur d'annulation de modifications associé au préréglage d'annulation dont la sélection rétablit le réglage tel qu'il existait immédiatement avant l'exécution du préréglage.

2. Aéronef selon la revendication 1, dans lequel le système de gestion d'environnement d'aéronef est en outre programmé pour :
recevoir une étiquette de préréglage indiquant un nom pour le préréglage d'environnement provenant de l'utilisateur ; et
enregistrer le réglage à l'aide de l'étiquette de préréglage en fonction du nom.

3. Aéronef selon la revendication 2, dans lequel le système de gestion d'environnement d'aéronef est en outre programmé pour :
recevoir une indication de type d'utilisateur associée au préréglage d'environnement ;
générer un sélecteur dont la sélection produit la demande de rappel de préréglage ; et
afficher le sélecteur à un emplacement basé sur l'indication du type d'utilisateur.

4. Aéronef selon la revendication 3, comprenant en outre un emplacement principal de l'équipage et un emplacement principal des passagers, et dans lequel le système de gestion d'environnement d'aéronef est en outre programmé pour afficher le sélecteur dans l'emplacement principal de l'équipage, dans l'emplacement principal des passagers, ou à la fois dans l'emplacement principal de l'équipage et dans l'emplacement principal des passagers, sur la base de l'indication de type d'utilisateur.

5. Aéronef selon la revendication 4, dans lequel la cabine passagers définit une cuisine et une zone de sièges, et
dans lequel le système de gestion d'environnement d'aéronef est en outre programmé pour afficher le sélecteur dans la cuisine en tant qu'emplacement principal de l'équipage, et/ou
dans lequel l' emplacement principal des passagers comprend un dispositif informatique mobile destiné à être utilisé par un passager.

6. Aéronef selon l'une quelconque des revendications 1 à 5, dans lequel le système de gestion d'environnement d'aéronef est en outre programmé pour :
recevoir une condition de déclenchement associée au préréglage d'environnement ;
stocker la condition de déclenchement en association avec le préréglage d'environnement ; et
rappeler le préréglage d'environnement en réponse à l'apparition de la condition de déclenchement.

7. Aéronef selon la revendication 6,
dans lequel le système de gestion d'environnement d'aéronef est en outre programmé pour rappeler le préréglage d'environnement en réponse au démarrage du système de gestion d'environnement d'aéronef en tant que condition de déclenchement, et/ou
dans lequel le système de gestion d'environnement d'aéronef est en outre programmé pour rappeler le préréglage d'environnement en réponse à la transition de l'aéronef entre des phases de vol.
